# EUROPÄISCHE PATENTSCHRIFT

(11) **EP 4 102 115 B1**
(45) Veröffentlichungstag und Bekanntmachung des Hinweises auf die Patenterteilung: **13.11.2024**
(21) Anmeldenummer: 22176176.0
(22) Anmeldetag: 30.05.2022
(51) Int. Cl.: F16K 5/04, F16K 5/06, F16K 5/18, F16K 5/20, F16J 15/3232, F16K 11/085, F16K 11/087

(54) **DICHTUNG UND VENTILVORRICHTUNG MIT EINER SOLCHEN DICHTUNG, SOWIE VERFAHREN ZUM ABDICHTEN EINER VENTILVORRICHTUNG**
SEAL AND VALVE DEVICE WITH SUCH A SEAL AND METHOD FOR SEALING A VALVE DEVICE
JOINT D'ÉTANCHÉITÉ ET DISPOSITIF SOUPAPE DOTÉ D'UN TEL JOINT D'ÉTANCHÉITÉ, AINSI QUE PROCÉDÉ D'ÉTANCHEMENT D'UN DISPOSITIF SOUPAPE

(30) Priorität: 11.06.2021 DE 102021115120
(43) Veröffentlichungstag der Anmeldung: 14.12.2022
(73) Patentinhaber: Illinois Tool Works Inc., Glenview, IL 60025 (US)
(72) Erfinder: Hauk, Torsten, Glenview, 60025 (US)
(74) Vertreter: HGF

(56) Entgegenhaltungen:
- EP-A1- 1 739 305
- US-A- 4 236 691
- US-A- 4 883 253
- US-A1- 2004 036 052
- US-A1- 2006 162 792

## Beschreibung

Die vorliegende Erfindung betrifft eine Dichtung und eine Ventilvorrichtung, insbesondere eine Kugelventilvorrichtung, mit einer solchen Dichtung und ein Verfahren zum Abdichten einer Ventilvorrichtung.

Unter einem Kugelventil versteht man ein Ventil, bei dem die Dichtwirkung von einer beweglichen Kugel erzeugt wird. Bei der typischen Anwendung als Rückschlagventil verhindert die Kugel den Rückfluss des Fluids durch das Ventil.

Kugelventile können als aktiv gesteuerte beziehungsweise geregelte Ventile eingesetzt werden. Dabei wird ein kugelförmiger Absperrkörper aktiv durch einen Aktuator betätigt bzw. gedreht. Der Absperrkörper führt bei einem Kugelventil eine rotierende Bewegung aus, um einen oder mehrere Strömungsquerschnitte zu öffnen oder zu schließen.

In der Regel ist die Kugel (1,4 bis 1,5 mal so groß) deutlich größer als die mittlere Ventilsitzweite. Der Ventilsitz wird als schräge Fläche und nicht als Kugelschale ausgeführt, so dass es nur zu einem linienförmigen Kontakt zwischen Kugel und Sitz kommt. Es ist diese Beschränkung auf eine Linie, die zum einen eine Adhäsion der Kugel am Ventilsitz verhindert und zum anderen die Unempfindlichkeit des Kugelventils gegenüber partikularen Einschlüssen in der durchströmenden Materie begründet: Die Einschlüsse werden von der sich an den Ventilsitz annähernden Kugel aus der Dichtline verdrängt. Durch die unvermeidliche Rotation der Kugel bei durch das Ventil fließendem Massestrom kommt immer ein anderer Teil der Kugel mit dem Sitz in Kontakt, in Kombination mit einer geeigneten Wahl von Kugel- und Ventilsitzmaterialien kann die Abnutzung auf die Kugel beschränkt werden. Die Kugeloberfläche wird somit gleichmäßig abgenutzt, ohne dass die Ventilfunktion durch diesen Verschleiß beeinträchtigt wird.

Im Betrieb dichten Kugelventile nie vollständig ab, sind jedoch beim Einsatz in partikelhaltigen Verunreinigungen der durchströmenden Stoffe niemals ganz undicht.

Die DE 10 2018 117 240 A1 beschreibt ein Kühlmittelventil für ein Fahrzeug, umfassend ein Gehäuse mit mehreren Kühlmittelanschlüssen und ein in dem Gehäuse zum Verbinden oder Trennen von Kühlmittelanschlüssen verstellbar angeordnetes Ventilelement, sowie mindestens eine im Bereich mindestens eines Kühlmittelanschlusses angeordnete Dichtungsanordnung, die einerseits dichtend an dem Gehäuse und andererseits dichtend an dem Ventilelement anliegt, wobei die Dichtungsanordnung ein Trägerelement aus einem ersten Material und ein Dichtelement aus einem zweiten Material aufweist, wobei das zweite Material weicher ist als das erste Material, wobei das Dichtelement eine an dem Ventilelement anliegende erste Dichtlippe und das Trägerelement einen Stützabschnitt aufweist, wobei die erste Dichtlippe mit einem freien Ende über den Stützabschnitt vorsteht, und wobei die erste Dichtlippe bei einem Kühlmittelfluss durch das Kühlmittelventil an den Stützabschnitt angedrückt wird.

Derartige Kühlmittelventile werden in Kühlkreisläufen von Fahrzeugen, wie PKW oder LKW eingesetzt. Sie dienen zum Beispiel zum Kühlen eines Verbrennungsmotors. Abhängig von der Stellung des Ventilelements wird zum Beispiel Kühlflüssigkeit während einer Aufwärmphase des Verbrennungsmotors über eine Bypassleitung an einem Kühler vorbeigeleitet und nach Erreichen der Betriebstemperatur durch den Kühler geleitet. Es ist bei Kühlmittelventilen abhängig von der Anwendung auch möglich, dass Kühlmittel nur temporär durch das Kühlmittelventil fließt, beispielsweise wenn in der Kaltstartphase eines Verbrennungsmotors der Kühlmittelfluss vollständig unterbunden wird. Die Steuerung des Ventilelements kann selbsttätig erfolgen, beispielsweise über Dehnstoffelemente. Es sind aber auch elektrische Antriebe zum Verstellen des Ventilelements möglich, die von einer Steuereinrichtung angesteuert werden.

Zum Abdichten der Kühlmittelanschlüsse gegenüber dem Ventilelement sind beispielsweise ringförmige Dichtungsanordnungen vorgesehen, die einerseits dichtend an dem Gehäuse, insbesondere dem den Kühlmittelanschluss begrenzenden Gehäuseabschnitt, und andererseits dichtend an dem Ventilelement anliegen.

Ein Kühlmittelventil mit einer solchen Dichtungsanordnung ist zum Beispiel bekannt aus EP 2 052 177 B1. Das dort beschriebene Thermostatventil besitzt ein kugelschalenförmiges Ventilelement, wobei die Dichtungsanordnung einen Gleitring aus gleitfähigem festem Kunststoff aufweist, der von einem elastomeren Dichtring gegen das Ventilelement vorgespannt ist. Der Gleitring kann zum Beispiel aus PTFE (Poly-tetrafluorethylen) bestehen und der elastomere Dichtring aus EPDM (Ethylen-Propylen-Dien-Kautschuk). Mit dem bekannten Thermostatventil kann eine jederzeit zuverlässige Abdichtung erreicht werden. Allerdings sind mit der bekannten Dichtungsanordnung nicht unerhebliche Kosten
verbunden.

In der US 4,236,691 A1 ist ein Kugelventil mit Hohlraumdruckverminderung beschrieben, umfassend ein Gehäuse mit einem Hohlraum, eine im Hohlraum angeordnete Kugel, in der ein Durchlass durch die Kugel ausgebildet ist, einen ringförmigen Ventilsitz auf jeder Seite der Kugel zwischen dem Gehäuse und der Kugel, wobei der Ventilsitz einen Lippenabschnitt und einen Wulstabschnitt aufweist, die beide in Berührung mit der Kugel stehen, wenn die Kugel ihre Schließstellung einnimmt und das Kugelventil in Betrieb ist, und Mittel am Wulstabschnitt, die es ermöglichen, dass durch den Druck im Hohlraum verursachte Druckkräfte auf einen Abschnitt der Oberfläche des Ventilsitzes so wirken, dass der daraus resultierende Kraftvektor ausreicht, um den Lippenabschnitt von der Kugel weg auszulenken und dadurch den Druck aus dem Hohlraum abzulassen, wenn dieser Druck einen bestimmten Wert erreicht.

Aus der US 4,883,253 A1 geht eine Kugelhahn hervor, umfassend eine im Wesentlichen sphärisch geformte Kugel mit einer Welle, die an einer Seite einstückig angesetzt ist, einen Durchflusskanal, der die Kugel durchläuft eine zurückspringende Fläche, welche den Durchflusskanal an jeder Seite der Kugel umgibt und gegenüber der sphärischen Oberfläche der Kugel sich nach innen erstreckt, einen aus Kunstharz bestehenden Hahnkörper mit einem Durchflusskanal, der den Hahnkörper der Länge nach durchsetzt und an seinen äußeren Enden mit Anschlüssen versehen ist, und einen im Wesentlichen ringförmigen Hahnsitz, der im Hahnkörper so angeordnet ist, dass er den Durchflusskanal im Hahnkörper umgibt, wobei der Hahnsitz eine innere, im Wesentlichen ringförmige Lippe aufweist, wobei die Lippe in eine Ausnehmung eingreift, die bestimmt ist durch die Zurückspring- Fläche und eine gedachte Verlängerung der sphärischen Fläche der Kugel, wobei die Lippe die Kugel nicht berührt, wenn sie in Offen-Position ist, und die Lippe die Kugel berührt, wenn sie in Schließ-Position ist.

In der US 2006/0162792 A1 ist eine Vorrichtung zur Strömungscharakterisierung für ein Kugelventil beschrieben, mit einem Gehäuse und welche einen Strömungsweg definiert, welcher sich durch das Gehäuse und ein drehbares Kugelventilglied in dem Gehäuse erstreckt, mit einer sphärisch gestalteten Kugel mit einer sphärischen äußeren Oberfläche und einer Durchgangsbohrung, welche sich durch das Kugelventilgliederstreckt, mit einer Mittellinie der Bohrung, welche im Wesentlichen mit einer Längsachse eines Strömungswegs fluchtet, wenn das Kugelventil sich in vollständig geöffneter Stellung befindet.

Aus der US 2004/0036052 A1 geht in Kugelventil hervor, das insbesondere für Brennstoffaggregate geeignet ist. Dieses weist einen Auslasskanal und mindestens einen Einlasskanal auf. Zwischen dem Auslasskanal und dem Einlasskanal ist ein Schaltelement vorgesehen. An dem Schaltelement liegt ein Dichtelement an. Zur Erhöhung der Dichtwirkung weist das Dichtelement zwei Dichtlippen auf, die jeweils an einer Kreislinie an dem Schaltelement anliegen.

Ein Problem bekannter Dichtungsanordnungen von Kühlmittelventilen liegt darin, dass ein Zielkonflikt besteht zwischen einem zuverlässigen Anlegen der Dichtungsanordnung an das Ventilelement und damit einer sicheren Abdichtung auch bei geringem Systemdruck einerseits, sowie einer großen Belastbarkeit und einem geringen Ausweichen bei hohem Druck bei geringen Reibmomenten und damit geringen Antriebsmomenten für das Ventilelement andererseits.

Ausgehend von dem erläuterten Stand der Technik liegt der Erfindung die Aufgabe zu Grunde, eine Ventilvorrichtung, insbesondere ein Kühlmittelventil der eingangs genannten Art, sowie ein Verfahren zum Abdichten einer Ventilvorrichtung bereitzustellen, das bei kostengünstiger Herstellung den erläuterten Zielkonflikt möglichst gut auflöst.

Aufgabe der vorliegenden Erfindung ist es zudem, eine Dichtung und eine Ventilvorrichtung mit einer solchen Dichtung, insbesondere einer Kugelventilvorrichtung, vorzusehen, die eine Alternative zu bekannten Dichtungen und Ventilvorrichtungen bereitstellt.

Eine weitere Aufgabe der vorliegenden Erfindung besteht darin, eine Dichtung und eine Ventilvorrichtung mit einer verbesserten Dichtwirkung vorzusehen.

Zudem ist es eine Aufgabe der vorliegenden Erfindung, eine Dichtung und eine Ventilvorrichtung, die sicher und zuverlässig im Betrieb sind.

Eine oder mehrere dieser Aufgaben werden durch die Merkmale der unabhängigen Patentansprüche 1 und 9 gelöst. Vorteilhafte Ausgestaltungen sind in den davon abhängigen Unteransprüchen angegeben.

Erfindungsgemäß ist eine Ventilvorrichtung, insbesondere eine Kugelventilvorrichtung, vorgesehen. Diese umfasst eine Gehäuseeinrichtung mit zumindest einem Fluidanschluss, einem Verschlusskörper, wobei der Verschlusskörper eine Drehachse aufweist, um die der Verschlusskörper zum Freigeben und Verschließen des Fluidanschlusses in einer Drehrichtung drehbar ist, wobei der Fluidanschluss eine Dichtung zum abdichtenden Anliegen am Verschlusskörper aufweist. Die vorliegende Erfindung zeichnet sich dadurch aus, dass die Dichtung eine erste und eine zweite Dichtlippe aufweist, wobei die Dichtlippen derart ausgebildet sind, dass im Betrieb zumindest während eines Betriebszustands nur eine der beiden Dichtlippen der Dichtung abdichtend am Verschlusskörper anliegt.

Ein Betriebszustand kann ein Normalfluss (Durchströmung von einem Einlass zu einem Auslass), Rückfluss (Durchströmung von einem Auslass zu einem Einlass) oder ein Stillstand (keine oder fast keine Durchströmung des Ventils) sein.

Somit ist erfindungsgemäß vorgesehen, dass die erste und die zweite Dichtlippe alternierend an einer Oberfläche des Verschlusskörpers abdichtend anliegen.

Bei einer Ventilvorrichtung, insbesondere einer Kugelventilvorrichtung, liegen je nach Ventilstellung an einer Ventilseite der Ventilvorrichtung und an einer Anschlussseite der Ventilvorrichtung unterschiedliche Druckgradienten vor. Die Erfinder der vorliegenden Erfindung haben erkannt, dass sich je nach Druckdifferenz zwischen einer Ventilseite und einer Anschlussseite bzw. je nach Durchflussrichtung der Ventilvorrichtung sich diese Druckunterschiede ausnutzen lassen, um abwechselnd entweder die erste oder die zweite Dichtlippe an den Verschlusskörper abdichtend anzupressen.

Im Rahmen der vorliegenden Erfindung bedeutet der Ausdruck, "dass an einer Anschlussseite ein höherer Druck" anliegt, dass eine Seite der Dichtung im Bereich eines Fluidanschlusses der Ventilvorrichtung mit einem höheren Druck beaufschlagt wird. Ein solcher Zustand wird als erster Betriebszustand bezeichnet.

In dem ersten Betriebszustand liegt somit die erste Dichtlippe abdichtend an dem Verschlusskörper an, wobei die Anschlussseite mit einem höheren Druck beaufschlagt ist als die Ventilseite.

Im Rahmen der vorliegenden Erfindung bedeutet der Ausdruck, "dass an einer Ventilseite ein höherer Druck" anliegt, dass eine Seite der Dichtung im Bereich eines Verschlusskörpers der Ventilvorrichtung mit einem höheren Druck beaufschlagt wird. Ein solcher Zustand wird als zweiter Betriebszustand bezeichnet.

In dem zweiten Betriebszustand liegt somit die zweite Dichtlippe abdichtend an dem Verschlusskörper an, wobei die Ventilseite mit einem höheren Druck beaufschlagt ist als die Anschlussseite .

Auf diese Weise wird eine Alternative zu aus dem Stand der Technik bekannten Dichtungen für Ventilvorrichtungen, insbesondere für Kugelventilvorrichtungen, bereitgestellt.

Zudem wird eine Dichtung mit verbesserter Dichtwirkung bereitgestellt, da die erste oder die zweite Dichtlippe nicht auf Grund ihrer Vorspannung am Verschlusskörper anliegen, sondern entsprechend druckbeaufschlagt an die Oberfläche des Verschlusskörpers gedrückt werden, was zu einer erhöhten Dichtwirkung führt. Zudem wird dadurch die Rückflussdichtheit erhöht.

Durch die erste und die zweite Dichtlippe ist somit jeweils eine Dichtkante einer Dichtlippe für eine jeweilige Druckabdichtung in Richtung Ventilseite oder in Richtung Anschlussseite vorhanden.

Hierbei ist vorgesehen, dass die erste und die zweite Dichtlippe je nach Druckdifferenz zwischen der Anschlussseite und der Ventilseite alternierend bzw. abwechselnd derart abdichtend am Verschlusskörper anliegen, dass wenn die Anschlussseite mit einem höheren Druck beaufschlagt ist, die erste Dichtlippe abdichtend am Verschlusskörper anliegt und, dass wenn die Ventilseite mit einem höheren Druck beaufschlagt ist, die zweite Dichtlippe abdichtend am Verschlusskörper anliegt.

Somit liegt bei der erfindungsgemäßen Vorrichtung immer entweder nur die erste oder nur die zweite Dichtlippe vollständig abdichtend am Verschlusskörper an.

Die nicht abdichtende Dichtlippe kann dann einen Abstand von ca. 1 mm bis 3 mm und insbesondere von ca. 1 mm bis 2 mm von der Oberfläche des Verschlusskörpers aufweisen.

Die erfindungsgemäße Ventilvorrichtung kann ein Kühlmittelventil sein, das für ein Fahrzeug, wie einen PKW oder LKW, vorgesehen ist. Das Kühlmittelventil kann in einem Kühlkreislauf eines Fahrzeugs mit Verbrennungsmotor oder Elektromotor oder einem Hybridfahrzeug angeordnet sein. Es kann zum Beispiel zum Kühlen eines Verbrennungsmotors oder der Batterien eines Elektrofahrzeugs vorgesehen sein. Es kann sich bei dem Kühlmittelventil um ein Thermostatventil handeln. Zum Verstellen des Ventilelements kann ein elektrischer Antrieb vorgesehen sein, der von einer Steuereinrichtung des Fahrzeugs angesteuert wird. Es ist jedoch auch möglich, dass ein temperaturabhängiges Steuerelement vorgesehen ist, wie zum Beispiel ein Dehnstoffelement, das abhängig von der Temperatur seine Länge verändert und dadurch das Ventilelement bzw. den Verschlusskörper verstellt. Das Gehäuse bzw. die Gehäuseeinrichtung des Kühlmittelventils hat zwei oder mehr als zwei Kühlmittel- bzw. Fluidanschlüsse, die beispielsweise mit Kühlmittelleitungen eines Kühlkreislaufs eines Fahrzeugs verbunden sein können. Durch Verstellen des Ventilelements können beispielsweise zwei Kühlmittelanschlüsse miteinander verbunden oder voneinander getrennt werden. Besitzt das Gehäuse beispielsweise drei Kühlmittelanschlüsse, kann durch Verstellen des Ventilelements beispielsweise über einen der Kühlmittelanschlüsse zugeführtes Kühlmittel entweder einem ersten oder einem zweiten der beiden anderen Kühlmittelanschlüsse zugeführt werden. Die beiden weiteren Kühlmittelanschlüsse können zum Beispiel einerseits mit einem Kühler und andererseits mit einer Bypassleitung zum Umgehen des Kühlers verbunden sein. Es ist auch möglich, dass im Betrieb des Kühlmittelventils zeitweise kein Kühlmittel durch den Kühlkreislauf und damit durch das Kühlmittelventil fließt, beispielsweise während einer Kaltstartphase eines Verbrennungsmotors. Als Kühlmittel kommt insbesondere eine Kühlflüssigkeit in Frage, wie zum Beispiel Kühlwasser. In an sich bekannter Weise ist mindestens eine Dichtung vorgesehen, die einerseits dichtend an dem Ventilelement und andererseits dichtend an dem Gehäuse, insbesondere einem einen Kühlmittelanschluss begrenzenden Gehäuseabschnitt, anliegt. Es kann insbesondere an jedem der Kühlmittelanschlüsse eine entsprechende Dichtungsanordnung vorgesehen sein, so dass die Anzahl der Dichtungsanordnungen der Anzahl der Kühlmittelanschlüsse des Gehäuses entsprechen kann.

Der Verschlusskörper kann in etwa kugelförmig oder kugelsegmentförmig oder auch in etwa zylindrisch ausgebildet sein, wobei eine der Dichtlippen an einer gekrümmten Oberfläche des Verschlusskörpers abdichtend anliegt.

Dadurch, dass immer nur eine Dichtlippe am Verschlusskörper abdichtend anliegt, treten bei einer erfindungsgemäßen Ventilvorrichtung im Betrieb keine höheren Reibungskräfte zwischen Dichtung und Verschlusskörper auf. Demgemäß können herkömmliche Aktuatoren für eine erfindungsgemäße Ventilvorrichtung vorgesehen sein, da zum Drehen des Verschlusskörpers keine höheren Kräfte bzw. Drehmomente benötigt werden.

Gegenüber einer Doppeldichtung, bei der immer beide Dichtlippen an einem Verschlusselement anliegen, ist der Reibungswiderstand zwischen Dichtung und Verschlusskörper daher erheblich verringert.

Die erste Dichtlippe und die zweite Dichtlippe können in einem Winkel größer 60° oder in einem Winkel größer 90° oder in einem Winkel größer 100° oder in einem Winkel größer 120° oder in einem Winkel größer 120° zueinander oder in einem Winkel größer 130° oder in einem Winkel größer 140° zueinander angeordnet sind.

Der Winkel zwischen der ersten und der zweiten Dichtlippe ist abhängig von dem Durchmesser eines abzudichtenden Verschlusskörpers. Je größer der Durchmesser eines Verschlusskörpers ist, desto größer ist der Winkel zwischen der ersten und der zweiten Dichtlippe.

Somit kann eine Spreizung bzw. ein Winkel zwischen der ersten und der zweiten Dichtlippe derart groß sein, dass eine Lippe, je nachdem ob der erste oder der zweite Betriebszustand vorliegt, derart vorgespannt ist, dass die erste oder die zweite Dichtlippe abdichtend am Verschlusskörper anliegt.

Ein Durchmesser des Verschlusskörpers kann in etwa 40 mm bis 70mm betragen. Ein Dichtdurchmesser bzw. ein Durchmesser der Dichtlippen kann in etwa 14 mm bis 30 mm betragen.

Dadurch, dass die Dichtlippen alternierend an einer gekrümmten Oberfläche des Verschlusskörpers anliegen, wird durch einen entsprechenden Winkelbereich sichergestellt, dass nur die erste oder nur die zweite Dichtlippe über die Anschlussseite oder die Ventilseite je nach Ventilstellung mit einem entsprechenden Druck derart beaufschlagt werden, dass eine Dichtlippe zu einer verbesserten Abdichtung eines Verschlusskörpers führt.

Hierzu trägt auch bei, dass sich die erste Dichtlippe in etwa orthogonal zu einer Durchflussrichtung des Fluidanschlusses und in etwa in parallel zu einer gekrümmten Oberfläche des Verschlusskörpers erstreckt und die zweite Dichtlippe sich in etwa in entgegengesetzter Richtung und in etwa in parallel zu einer gekrümmten Oberfläche des Verschlusskörpers erstreckt.

Somit kann sich die erste Dichtlippe in Richtung einer Freigabeausnehmung des Verschlusskörpers erstrecken. Die zweite Dichtlippe kann sich weg von der Freigabeausnehmung erstrecken.

Unter einer Durchflussrichtung wird im Rahmen der vorliegenden Erfindung eine Richtung verstanden, die sich parallel zu einem rohrförmigen Fluidanschluss der Ventilvorrichtung erstreckt.

Durch die vorstehend aufgezeigte bauliche Ausgestaltung der ersten und der zweiten Dichtlippe wird die Dichtwirkung der Dichtung verbessert.

Zudem kann eine Lagereinrichtung vorgesehen sein, über die der Verschlusskörper in einer Drehrichtung um eine Drehachse drehbar gelagert ist.

Zwischen der ersten und der zweiten Dichtlippe kann zumindest abschnittsweise eine Versteifungsstruktur vorgesehen sein.

Eine derartige Versteifungsstruktur kann durch Streben ausgebildet sein, die aus demselben Material wie die Dichtung selbst ausgebildet sind und bei Herstellung der Dichtung einstückig an dieser angeformt sind.

Eine solche Verbindung bzw. Versteifung zwischen den Dichtlippen verhindert ein Umklappen der ersten oder der zweiten Dichtlippe bei einer Drehung des Verschlusskörpers in Drehrichtung.

Die Dichtung kann einen in etwa rohrförmigen Montageabschnitt und einen in etwa kreisringförmigen Dichtabschnitt aufweisen, wobei der rohrförmige Montageabschnitt mit einem rohrförmigen Abschnitt bzw. Stutzen des Anschlusses verbunden ist.

Weiterhin kann am Montageabschnitt eine radial umlaufende Dichteinrichtung zum abdichtenden Anliegen am Fluidanschluss vorgesehen sein.

Hierbei ist vorgesehen, dass der rohrförmige Montageabschnitt der Dichtung bzw. der Flanschabschnitt mittels einer Presspassung mit einem rohrförmigen Abschnitt des Fluidanschlusses verbunden ist.

Über die radial umlaufende Dichteinrichtung, die beispielsweise zwei oder mehr radial umlaufende Dichtkanten aufweist, ist die Dichtung selbst gegenüber dem Anschluss bzw. der Gehäuseeinrichtung abgedichtet. Auf diese Weise ist eine Integration der Dichtung auf einem rohrförmigen Abschnitt des Fluidanschlusses ohne eine zusätzliche Hartkomponente möglich.

Zusätzlich kann die Dichtung einen in etwa rohrförmigen Flanschabschnitt aufweisen, der aus einem härteren Material (Hartkomponente) als die Dichtung ausgebildet ist und der mit dem Montageabschnitt der Dichtung, vorzugsweise mittels eines 2-KomponentenSpritzgießverfahrens, verbunden ist.

Durch einen solchen rohrförmigen Flanschabschnitt wird die Dichtung selbst versteift und/oder eine Montagehilfe zur einfacheren Montage der Dichtung auf einem Stutzen des Fluidanschlusses bereitgestellt.

In vorteilhafter Weise kann der aus einer Hartkomponente ausgebildete rohrförmige Flanschabschnitt somit mittels eines Zwei-Komponentenspritzgießverfahrens mit der Dichtung verbunden sein.

In einer Verschlusskörperoberfläche kann zumindest eine Freigabeausnehmung zum Freigeben des Fluidanschlusses ausgebildet sein, wobei sich die erste Dichtlippe in Richtung der Freigabeausnehmung des Verschlusskörpers erstreckt und wobei sich die zweite Dichtlippe weg von der Freigabeausnehmung erstreckt.

Die Dichtung kann einen Klappabschnitt aufweisen, der derart ausgebildet ist, dass wenn es zu einem Druckwechsel zwischen der Anschlussseite und der Ventilseite kommt, das heißt wenn die Anschlussseite mit einem höheren Druck als eine Ventilseite beaufschlagt wird oder umgekehrt klappt die Dichtung entlang des Klappabschnittes derart, dass nur die erste oder die zweite Dichtlippe an dem Verschlusskörper abdichtend anliegt

Der Klappabschnitt kann vorzugsweise radial umlaufend um die Dichtung, insbesondere im Bereich zwischen der ersten und der zweiten Dichtlippe angeordnet sein, wobei der Klappabschnitt scharnierartig oder als Scharnier ausgebildet sein kann. Der Klappabschnitt kann auch durch eine bauliche Ausgestaltung des Materials der Dichtung, bspw. durch eine Materialschwächung in diesem Bereich nach Art eines Filmscharniers oder dergleichen ausgebildet sein.

Eine vorstehend aufgezeigte Dichtung kann im Rahmen der vorliegenden Erfindung einen eigenständigen Erfindungsgedanken darstellen. Eine solche Dichtung kann auch für andere Arten von abzudichtenden Fluidanschlüssen und/oder Ventilen verwendet werden.

Die vorliegende Erfindung kann insbesondere in Verbindung mit dem in der DE 10 2018 117 240 A1 beschriebenen Kühlmittelventil für ein Fahrzeug kombiniert werden. Auf diese Anmeldung wird hiermit vollinhaltlich Bezug genommen.

Weiterhin wird erfindungsgemäß ein Verfahren zum Abdichten einer vorstehen aufgezeigten Ventilvorrichtung bereitgestellt, wobei eine Dichtung mit einer ersten und einer zweiten Dichtlippe zum Abdichtenden eines Verschlusskörpers vorgesehen ist. Das Verfahren umfasst die folgenden Schritte:
Abdichtendes Anliegen nur der ersten Dichtlippe an dem Verschlusskörper, wenn eine Anschlussseite des Verschlusskörpers mit einem höheren Druck als eine Ventilseite beaufschlagt wird, und
Abdichtendes Anliegen nur der zweiten Dichtlippe an dem Verschlusskörper, wenn die Ventilseite mit einem höheren Druck als die Anschlussseite beaufschlagt wird.

Zudem kann die Dichtung einen Klappabschnitt aufweise, wobei wenn es zu einem Druckwechsel zwischen die Anschlussseite und der Ventilseite kommt, das heißt wenn die Anschlussseite mit einem höheren Druck als eine Ventilseite beaufschlagt wird oder umgekehrt klappt die Dichtung entlang des Klappabschnittes derart, dass nur die erste Dichtlippe an dem Verschlusskörper abdichtend anliegt, wenn eine Anschlussseite des Verschlusskörpers mit einem höheren Druck als eine Ventilseite beaufschlagt wird, und
dass nur die zweite Dichtlippe an dem Verschlusskörper abdichtend anliegt, wenn Ventilseite des Verschlusskörpers mit einem höheren Druck als die Anschlussseite beaufschlagt wird.

Die nicht abdichtende Dichtlippe kann dann in einem Abstand von ca. 1 mm bis 3 mm und insbesondere von ca. 1 mm bis 2 mm von der Oberfläche des Verschlusskörpers beabstandet angeordnet sein.

Die vorliegende Erfindung wird im Folgenden anhand eines in den Figuren dargestellten Ausführungsbeispiels näher beschrieben. Diese zeigen in:

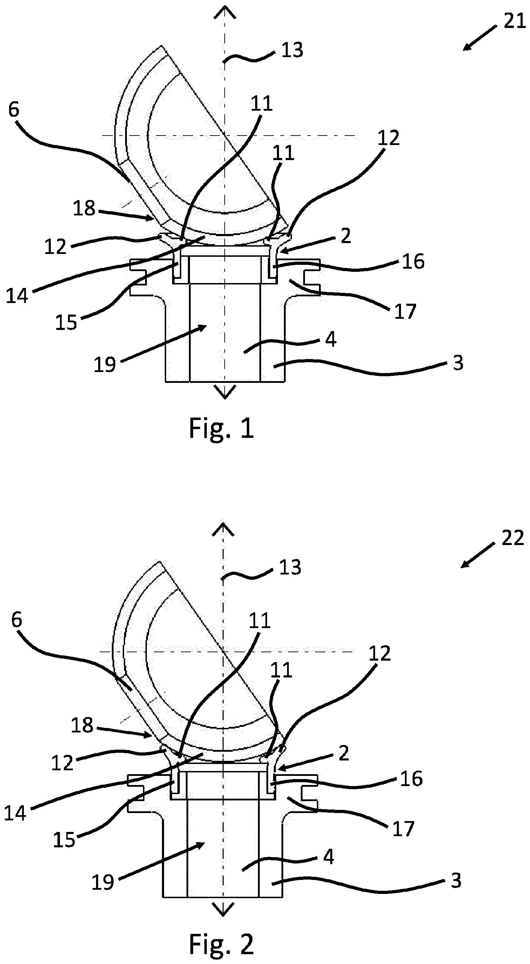

Figur 1 eine schematische seitlich geschnittene Darstellung einer Ventilvorrichtung mit einer erfindungsgemäßen Dichtung in einem ersten Betriebszustand in dem eine erste Dichtlippe abdichtend an einem Verschlusskörper anliegt, wenn eine Anschlussseite mit einem höheren Druck beaufschlagt ist als eine Ventilseite.
Figur 2 eine weitere schematische eine schematische seitlich geschnittene Darstellung einer Ventilvorrichtung mit einer erfindungsgemäßen Dichtung in einem zweiten Betriebszustand in dem eine zweite Dichtlippe abdichtend an einem Verschlusskörper anliegt, wenn eine Ventilseite mit einem höheren Druck beaufschlagt ist als eine Anschlussseite., und

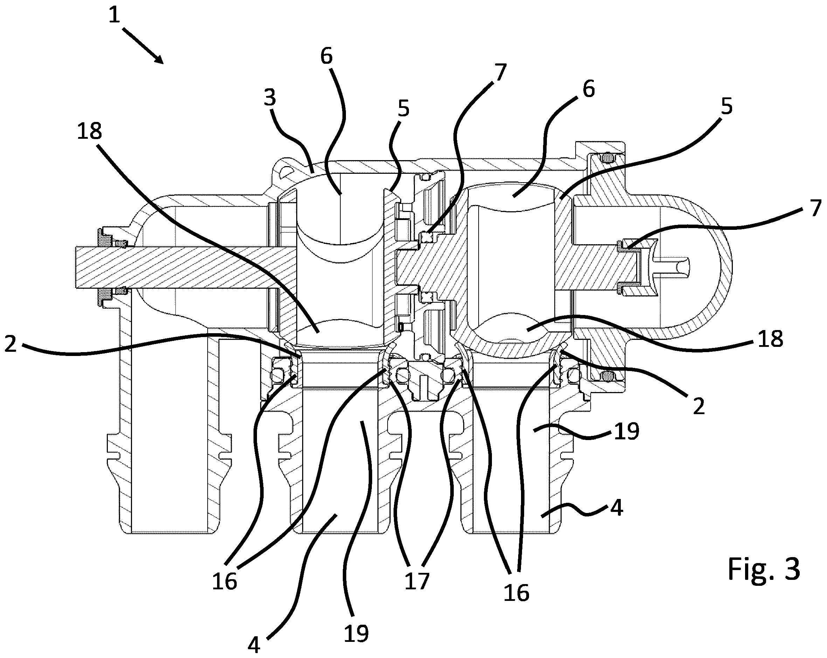

Figur 3 eine seitlich geschnittene Darstellung einer Ventilvorrichtung, bei der eine erfindungsgemäße Dichtung verwendbar ist.

Im Folgenden wird eine Ventilvorrichtung 1, insbesondere eine Kugelventilvorrichtung, mit einer erfindungsgemäßen Dichtung 2 näher beschrieben (Figuren 1 bis 5).

Die Ventilvorrichtung 1 umfasst eine Gehäuseeinrichtung 3 mit zumindest einem Fluidanschluss 4.

Zum Verschließen und Öffnen des Fluidanschlusses 4 ist ein kugelsegmentförmiger Verschlusskörper 5 vorgesehen.

Der Verschlusskörper 5 weist eine Freigabeausnehmung 6 auf, um einen Durchfluss eines Fluids durch den Verschlusskörper zu ermöglichen.

Weiterhin ist eine Lagereinrichtung 7 vorgesehen, über die der Verschlusskörper 5 in einer Drehrichtung 8 um eine Drehachse 9 drehbar gelagert ist.

Am Fluidanschluss 4 ist die Dichtung 2 zum abdichtenden Anliegen am Verschlusskörper 5 vorgesehen.

Die Dichtung 10 weist eine erste und eine zweite Dichtlippe 11, 12 auf, wobei die Dichtlippen 11, 12 derart ausgebildet sind, dass im Betrieb nur eine der Dichtlippen 11, 12 abdichtend am Verschlusskörper 5 anliegt.

Die erste Dichtlippe 11 und die zweite Dichtlippe 12 sind in einem Winkel zwischen 60° und 140° zueinander angeordnet. Ein geeigneter Winkel zwischen der ersten Dichtlippe 11 und der zweiten Dichtlippe 12 hängt von der Krümmung bzw. einem entsprechenden Radius des kugelförmigen oder kugelsegmentförmigen Verschlusskörpers 5 ab. Je größer der Radius des Verschlusskörpers 5 ist, desto größer ist der Winkel zwischen der ersten Dichtlippe 11 und der zweiten Dichtlippe 12.

Die erste Dichtlippe 11 erstreckt sich in etwa orthogonal zu einer Durchflussrichtung 13 des Fluidanschlusses 4 und in Richtung des Fluidanschlusses 4 sowie in etwa parallel zu einer gekrümmten Oberfläche 14 des Verschlusskörpers 5.

Die zweite Dichtlippe 12 erstreckt in etwa parallel zu der gekrümmten Oberfläche 14 des Verschlusskörpers 5 und weg vom Fluidanschluss 4.

Der Abschnitt der Dichtung, in dem die erste und die zweite Dichtlippe 11, 12 vorgesehen sind, ist in etwa kreisringförmig ausgebildet, wobei sich die erste Dichtlippe 11 in etwa in radialer Richtung nach innen erstreckt und die zweite Dichtlippe 12 wie vorstehend aufgezeigt, gegenüber der ersten Dichtlippe in einem vorbestimmten Winkel zwischen 60° und 130° angeordnet ist.

An dem kreisringförmigen Abschnitt 15 der Dichtung ist ein in etwa rohrförmiger Montageabschnitt 16 angeformt.

Über den rohrförmigen Montageabschnitt 16 ist die Dichtung 2 mit einem rohrförmigen Abschnitt bzw. Stutzen 17 des Fluidanschlusses 4 verbunden.

Die Dichtung 2 ist aus einer Weichkomponente ausgebildet. Es ist eine Presspassung zum Verbinden der Dichtung 2 mit dem Stutzen 17 vorgesehen.

Weiterhin kann der rohrförmige Montageabschnitt 16 einen in etwa rohrförmigen Flanschabschnitt (nicht dargestellt) aufweisen, der aus einem härteren Material als die Dichtung 2 bzw. aus einer Hartkomponente ausgebildet ist. Dieser ist mit dem Montageabschnitt 16 der Dichtung 2 vorzugsweise mittels eines Zwei-Komponentenspritzgießverfahrens verbunden.

Zwischen den beiden Dichtlippen 11, 12 ist zumindest abschnittsweise eine Versteifungsstruktur 20 vorgesehen.

Liegt in der Ventilvorrichtung ein Druck an einer Ventilseite 18 an bzw. ist auf der Ventilseite im Bereich der Gehäuseeinrichtung 3 bzw. des Verschlusskörpers 5 ein höherer Druck, dann wird die zweite Dichtlippe 12 auf eine gekrümmte Oberfläche des Verschlusskörpers 5 gedrückt (Fig. 2).

Insbesondere ist hierbei vorgesehen, dass nur die zweite Dichtlippe 12 radial umlaufend um eine entsprechende Freigabeausnehmung 6 abdichtend am Verschlusskörper 5 anliegt.

Ein solcher Druck wird im Folgenden als ventilseitiger Druck und zweiter Betriebszustand 22 bezeichnet.

Ist hingegen im Bereich des Fluidanschlusses 4 ein erhöhter Druck vorhanden, dann liegt nur die erste Dichtlippe 11 entsprechend abdichtend an einer gekrümmten Oberfläche des Verschlusskörpers 5 an (Fig. 1). Ein Druck von dieser Seite wird im Folgenden als anschlussseitiger Druck und erster Betriebszustand 21 bezeichnet.

Weiterhin ist erfindungsgemäß ein Verfahren zum Abdichten einer vorstehen aufgezeigten Ventilvorrichtung 1 bereitgestellt, wobei eine Dichtung 2 mit einer ersten und einer zweiten Dichtlippe 11, 12 zum Abdichten eines Verschlusskörpers 5 vorgesehen ist.

Das Verfahren umfasst die folgenden Schritte:
Abdichtendes Anliegen nur der ersten Dichtlippe 11 an dem Verschlusskörper 5, wenn eine Anschlussseite 19 des Verschlusskörpers mit einem höheren Druck als eine Ventilseite 18 beaufschlagt wird (erster Betriebszustand 21; Figur 1), und
Abdichtendes Anliegen nur der zweiten Dichtlippe 12 an dem Verschlusskörper 5, wenn die Ventilseite 18 mit einem höheren Druck als die Anschlussseite 19 beaufschlagt wird (zweiter Betriebszustand 22; Figur 2).

Zudem kann die Dichtung einen Klappabschnitt (nicht dargestellt) aufweisen, wobei wenn es zu einem Druckwechsel zwischen der Anschlussseite und der Ventilseite kommt, das heißt wenn die Anschlussseite 19 mit einem höheren Druck als sie Ventilseite 18 beaufschlagt wird oder umgekehrt klappt die Dichtung 2 entlang des Klappabschnittes derart, dass nur die erste Dichtlippe 11 an dem Verschlusskörper 5 abdichtend anliegt, wenn die Anschlussseite 19 des Verschlusskörpers 5 mit einem höheren Druck als die Ventilseite 19 beaufschlagt wird, sodass ein erster Betriebszustand 21 vorliegt (Figur 1), und
dass nur die zweite Dichtlippe 12 an dem Verschlusskörper 5 abdichtend anliegt, wenn die Ventilseite 18 des Verschlusskörpers 5 mit einem höheren Druck als eine Anschlussseite 19 beaufschlagt wird, sodass ein zweiter Betriebszustand 22 vorliegt (Figur 2).

Die nicht abdichtende Dichtlippe ist dann in einem Abstand von ca. 1 mm bis 3 mm und insbesondere von ca. 1 mm bis 2 mm von der Oberfläche des Verschlusskörpers 5 beabstandet angeordnet.

### Bezugszeichenliste

- 1: Ventilvorrichtung
- 2: Dichtung
- 3: Gehäuseeinrichtung
- 4: Fluidanschluss
- 5: Verschlusskörper
- 6: Freigabeausnehmung
- 7: Lagereinrichtung
- 8: Drehrichtung
- 9: Drehachse
- 10 11: Erste Dichtlippe
- 12: Zweite Dichtlippe
- 13: Durchflussrichtung
- 14: Gekrümmte Oberfläche
- 15: Kreisringförmiger Dichtabschnitt
- 16: Montageabschnitt
- 17: rohrförmiger Abschnitt
- 18: Ventilseite
- 19: Anschlussseite
- 20: Versteifungsstruktur
- 21: erster Betriebszustand
- 22: zweiter Betriebszustand

## Patentansprüche

1. Ventilvorrichtung (1), insbesondere eine Kugelventilvorrichtung, umfassend,
eine Gehäuseeinrichtung (3) mit zumindest einem Fluidanschluss (4),
einen Verschlusskörper (5), wobei der Verschlusskörper (5) eine Drehachse (9) aufweist, um die der Verschlusskörper (5) zum Freigeben und Verschließen des Fluidanschlusses (4) in einer Drehrichtung (8) drehbar ist, wobei der Fluidanschluss (4)
eine Dichtung (2) zum abdichtenden Anliegen am Verschlusskörper (5) aufweist,
wobei die Dichtung (2) eine erste und eine zweite Dichtlippe (11, 12) aufweist, wobei die Dichtlippen (11, 12) derart ausgebildet sind, dass im Betrieb zumindest während eines Betriebszustands nur eine der beiden Dichtlippen (11, 12) abdichtend am Verschlusskörper (5) anliegt, **dadurch gekennzeichnet, dass** die erste und die zweite Dichtlippe (11, 12) je nach Druckdifferenz zwischen einer Anschlussseite (19) und einer Ventilseite (18) alternierend derart abdichtend am Verschlusskörper (5) anliegen, dass wenn die Anschlussseite (19) in einem ersten Betriebszustand (21) mit einem höheren Druck beaufschlagt ist, nur die erste Dichtlippe (11) abdichtend am Verschlusskörper (5) anliegt, und, dass wenn die Ventilseite (18) in einem zweiten Betriebszustand (22) mit einem höheren Druck beaufschlagt ist, nur die zweite Dichtlippe (12) abdichtend am Verschlusskörper (5) anliegt.

2. Ventilvorrichtung (1) gemäß Anspruch 1,
**dadurch gekennzeichnet,**
**dass** der Verschlusskörper (5) in etwa kugelförmig oder kugelsegmentförmig oder in etwa zylindrisch ausgebildet ist, wobei eine der Dichtlippen (11, 12) an einer gekrümmten Oberfläche (14) des Verschlusskörpers (5) abdichtend anliegt.

3. Ventilvorrichtung (1) gemäß Anspruch 1 oder 2,
**dadurch gekennzeichnet,**
**dass** die erste Dichtlippe (11) und die zweite Dichtlippe (12) in einem Winkel größer 60° oder in einem Winkel größer 90° oder in einem Winkel größer 100° zueinander oder in einem Winkel größer 120° zueinander oder in einem Winkel größer 120° zueinander oder in einem Winkel größer 130° zueinander oder in einem Winkel größer 140° zueinander angeordnet sind.

4. Ventilvorrichtung (1) gemäß Anspruch 2 oder 3,
**dadurch gekennzeichnet,**
**dass** sich die erste Dichtlippe (11) in etwa orthogonal zu einer Durchflussrichtung (13) des Fluidanschlusses (4) und in etwa in parallel zu einer gekrümmten Oberfläche (14) des Verschlusskörpers (5) erstreckt und die zweite Dichtlippe (12) sich in etwa in entgegengesetzter Richtung und in etwa in parallel zu einer gekrümmten Oberfläche (14) des Verschlusskörpers (5) erstreckt.

5. Ventilvorrichtung (1) gemäß einem der Ansprüche 1 bis 4,
**dadurch gekennzeichnet,**
**dass** die Dichtung (2) einen in etwa rohrförmigen Montageabschnitt (16) und einen in etwa kreisringförmigen Dichtabschnitt (15) aufweist, wobei der rohrförmige Montageabschnitt (16) mit einem rohrförmigen Abschnitt (17) (Stutzen) des Fluidanschlusses (4) verbunden ist und wobei eine radial umlaufende Dichteinrichtung zum abdichtenden Anliegen am Anschluss vorgesehen ist und/oder dass die Dichtung (2) einen in etwa rohrförmigen Flanschabschnitt aufweist, der aus einem härteren Material als die Dichtung (2) ausgebildet ist und der mit dem Montageabschnitt (16) der Dichtung (2), vorzugsweise mittels eine 2-Komponaneten Spritzgießverfahrens, verbunden ist..

6. Ventilvorrichtung (1) gemäß einem der Ansprüche 1 bis 5,
**dadurch gekennzeichnet,**
**dass** die Dichtung (2) einen Klappabschnitt aufweist, der derart ausgebildet ist, dass wenn es zu einem Druckwechsel zwischen der Anschlussseite (19) und der Ventilseite (18) kommt, das heißt wenn die Anschlussseite (19) mit einem höheren Druck als die Ventilseite (18) beaufschlagt wird oder umgekehrt, klappt die Dichtung (2) entlang des Klappabschnittes derart, dass nur die erste oder nur die zweite an dem Verschlusskörper (5) abdichtend anliegt.

7. Ventilvorrichtung (1) gemäß einem der Ansprüche 1 bis 6,
**dadurch gekennzeichnet,**
**dass** in einer Verschlusskörperoberfläche zumindest eine Freigabeausnehmung (6) zum Freigeben des Fluidanschlusses (4) ausgebildet ist, wobei sich die erste Dichtlippe (11) in Richtung der Freigabeausnehmung (6) des Verschlusskörpers (5) erstreckt und wobei sich die zweite Dichtlippe (12) weg von der Freigabeausnehmung (6) erstreckt.

8. Verfahren zum Abdichten einer Ventilvorrichtung (1) gemäß einem der Ansprüche 1 bis 7, umfassend die folgenden Schritte Abdichtendes Anliegen nur der ersten Dichtlippe (11) an dem Verschlusskörper (5), wenn eine Anschlussseite (19) in einem ersten Betriebszustand (21) des Verschlusskörpers (5) mit einem höheren Druck als eine Ventilseite (18) beaufschlagt wird, und
Abdichtendes Anliegen nur der zweiten Dichtlippe (12) an dem Verschlusskörper (5), wenn die Ventilseite (18) in einem zweiten Betriebszustand (22) mit einem höheren Druck als die Anschlussseite (19) beaufschlagt wird.

9. Verfahren gemäß Anspruch 8,
**dadurch gekennzeichnet,**
**dass** die Dichtung (2) einen Klappabschnitt aufweist, wobei wenn es zu einem Druckwechsel zwischen die Anschlussseite (19) und der Ventilseite (18) kommt, das heißt wenn die Anschlussseite (19) mit einem höheren Druck als die Ventilseite (18) beaufschlagt wird oder umgekehrt klappt die Dichtung (2) entlang des Klappabschnittes derart, dass nur die erste Dichtlippe (11) an dem Verschlusskörper (5) abdichtend anliegt, wenn die Anschlussseite (19) des Verschlusskörpers (5) mit einem höheren Druck als eine Ventilseite (18) beaufschlagt wird, und
**dass** nur die zweite Dichtlippe (12) an dem Verschlusskörper (5) abdichtend anliegt, wenn Ventilseite (18) des Verschlusskörpers (5) mit einem höheren Druck als die Anschlussseite (19) beaufschlagt wird.

## Claims

1. A valve apparatus (1), in particular a ball valve apparatus, comprising a housing device (3) having at least one fluid port (4), a closure body (5), wherein the closure body comprises (5) an axis of rotation (9) about which the closure body (5) can be rotated in a direction of rotation (8) in order to release and close the fluid port (4), wherein the fluid port (4)comprises a seal (2) for sealing abutment against the closure body (5),
wherein the seal (2) comprises a first and a second sealing lip (11, 12), wherein the sealing lips (11, 12) are configured such that, during operation, at least during one operating state, only one of the two sealing lips (11, 12) sealingly abuts against the closure body (5),
**characterized in that**
as a function of the pressure difference between a port side (19) and a valve side (18), the first and the second sealing lip (11, 12) alternately abut sealingly against the closure body (5) in such a way that, when the port side (19) is exposed to a higher pressure in a first operating state (21), only the first sealing lip (11) sealingly abuts against the closure body (5), and when the valve side (18) is exposed to a higher pressure in a second operating state (22), only the second sealing lip (12) sealingly abuts against the closure body (5).

2. The valve apparatus (1) according to claim 1,
**characterized in that**
the closure body (5) is approximately spherical or spherically segmented or approximately cylindrical, wherein one of the sealing lips (11, 12) abuts sealingly against a curved surface (14) of the closure body (5).

3. The valve apparatus (1) according to claim 1 or 2,
**characterized in that**
the first sealing lip (11) and the second sealing lip (12) are arranged at an angle greater than 60° or at an angle greater than 90° or at an angle greater than 100° with respect to one another or at an angle greater than 120° with respect to one another or at an angle greater than 120° with respect to one another or at an angle greater than 130° with respect to one another or at an angle greater than 140° with respect to one another.

4. The valve apparatus (1) according to claim 2 or 3,
**characterized in that**
the first sealing lip (11) extends approximately orthogonally to a through-flow direction (13) of the fluid port (4) and approximately parallel to a curved surface (14) of the closure body (5) and the second sealing lip (12) extends approximately in the opposite direction and approximately parallel to a curved surface (14) of the closure body (5).

5. The valve apparatus (1) according to any one of claims 1 to 4,
**characterized in that**
the seal (2) comprises an approximately tubular assembly portion (16) and an approximately annular sealing portion (15), wherein the tubular assembly portion (16) is connected to a tubular portion (17) (nozzle) of the fluid port (4), and wherein a radially circumferential sealing device is provided for sealing abutment against the port and/or that the seal (2) comprises an approximately tubular flange portion, which is formed from a harder material than the seal (2) and is connected to the assembly portion (16) of the seal (2), preferably by means of a 2-component injection molding method..

6. The valve apparatus (1) according to any one of claims 1 to 5,
**characterized in that**
the seal (2) comprises a flap portion configured such that, when a pressure change occurs between the port side (19) and the valve side (18), that is to say when the port side (19) is exposed to a higher pressure than the valve side (18) or vice versa, the seal (2) folds along the flap portion such that only the first or only the second abuts sealingly against the closure body (5).

7. The valve apparatus (1) according to any one of claims 1 to 6,
**characterized in that**
at least one release recess (6) for releasing the fluid port (4) is configured in a closure body surface, wherein the first sealing lip (11) extends in the direction of the release recess (6) of the closure body (5) and wherein the second sealing lip (12) extends away from the release recess (6).

8. A method for sealing a valve apparatus (1) according to any one of claims 1 to 7,
comprising the following steps
sealing abutment of only the first sealing lip (11) against the closure body (5) when a port side (19) is exposed to a higher pressure than a valve side (18) in a first operating state (21) of the closure body (5), and
sealing abutment of only the second sealing lip (12) against the closure body (5) when the valve side (18) is exposed to a higher pressure than the port side (19) in a second operating state (22) .

9. The method according to claim 8,
**characterized in that**
the seal (2) comprises a flap portion, wherein, when there is a pressure change between the port side (19) and the valve side (18), that is to say when the port side (19) is exposed to a higher pressure than the valve side (18) or vice versa, the seal (2) folds along the flap portion in such a way that only the first sealing lip (11) abuts sealingly against the closure body (5) when the port side (19) of the closure body (5) is exposed to a higher pressure than a valve side (18), and
only the second sealing lip (12) abuts sealingly against the closure body (5) when [the] valve side (18) of the closure body (5) is exposed to a higher pressure than the port side (19).

## Revendications

1. Appareil à vanne (1), en particulier un appareil à vanne à boisseau sphérique, comprenant un dispositif de logement (3) ayant au moins un orifice de fluide (4), un corps de fermeture (5), dans lequel le corps de fermeture comprend (5) un axe de rotation (9) autour duquel le corps de fermeture (5) peut être tourné dans un sens de rotation (8) afin de libérer et de fermer l'orifice de fluide (4), dans lequel l'orifice de fluide (4) comprend un joint (2) pour une butée d'étanchéité contre le corps de fermeture (5), dans lequel le joint (2) comprend une première et une deuxième lèvre d'étanchéité (11, 12), dans lequel les lèvres d'étanchéité (11, 12) sont configurées de telle sorte que, en cours de fonctionnement, au moins pendant un état de fonctionnement, une seule des deux lèvres d'étanchéité (11, 12) bute de manière étanche contre le corps de fermeture (5),
**caractérisé en ce que**
en fonction de la différence de pression entre un côté orifice (19) et un côté vanne (18), la première et la deuxième lèvre d'étanchéité (11, 12) butent de manière étanche et alternée contre le corps de fermeture (5) de telle sorte que, lorsque le côté orifice (19) est exposé à une pression plus élevée dans un premier état de fonctionnement (21), seule la première lèvre d'étanchéité (11) bute de manière étanche contre le corps de fermeture (5), et lorsque le côté vanne (18) est exposé à une pression plus élevée dans un deuxième état de fonctionnement (22), seule la deuxième lèvre d'étanchéité (12) bute de manière étanche contre le corps de fermeture (5).

2. Appareil à vanne (1) selon la revendication 1,
**caractérisé en ce que**
le corps de fermeture (5) est approximativement sphérique ou segmenté sphériquement ou approximativement cylindrique, dans lequel l'une des lèvres d'étanchéité (11, 12) bute de manière étanche contre une surface incurvée (14) du corps de fermeture (5) .

3. Appareil à vanne (1) selon la revendication 1 ou 2,
**caractérisé en ce que**
la première lèvre d'étanchéité (11) et la deuxième lèvre d'étanchéité (12) sont agencées selon un angle supérieur à 60° ou selon un angle supérieur à 90° ou selon un angle supérieur à 100° l'une par rapport à l'autre ou selon un angle supérieur à 120° l'une par rapport à l'autre ou selon un angle supérieur à 120° l'une par rapport à l'autre ou selon un angle supérieur à 130° l'une par rapport à l'autre ou selon un angle supérieur à 140° l'une par rapport à l'autre.

4. Appareil à vanne (1) selon la revendication 2 ou 3,
**caractérisé en ce que**
la première lèvre d'étanchéité (11) s'étend approximativement orthogonalement à une direction d'écoulement (13) de l'orifice de fluide (4) et approximativement parallèle à une surface incurvée (14) du corps de fermeture (5) et la deuxième lèvre d'étanchéité (12) s'étend approximativement dans la direction opposée et approximativement parallèle à une surface incurvée (14) du corps de fermeture (5).

5. Appareil à vanne (1) selon l'une quelconque des revendications 1 à 4,
**caractérisé en ce que**
le joint (2) comprend une portion d'assemblage approximativement tubulaire (16) et une portion d'étanchéité approximativement annulaire (15), dans lequel la portion d'assemblage tubulaire (16) est connectée à une portion tubulaire (17) (buse) de l'orifice de fluide (4), et dans lequel un dispositif d'étanchéité radialement circonférentiel est prévu pour assurer l'étanchéité de la butée contre l'orifice et/ou que le joint (2) comprend une portion de bride approximativement tubulaire, qui est formée à partir d'un matériau plus dur que le joint (2) et est connectée à la portion d'assemblage (16) du joint (2), de préférence au moyen d'un procédé de moulage par injection à deux composants..

6. Appareil à vanne (1) selon l'une quelconque des revendications 1 à 5,
**caractérisé en ce que**
le joint (2) comprend une portion de volet configurée de telle sorte que, lorsqu'un changement de pression se produit entre le côté orifice (19) et le côté vanne (18), c'est-à-dire lorsque le côté orifice (19) est exposé à une pression plus élevée que celle du côté vanne (18) ou inversement, le joint (2) se plie le long de la portion de volet de telle sorte que seul le premier ou seul le deuxième bute de manière étanche contre le corps de fermeture (5).

7. Appareil à vanne (1) selon l'une quelconque des revendications 1 à 6,
**caractérisé en ce que**
au moins un évidement de libération (6) pour libérer l'orifice de fluide (4) est configuré dans une surface de corps de fermeture, dans lequel la première lèvre d'étanchéité (11) s'étend dans la direction de l'évidement de libération (6) du corps de fermeture (5) et dans lequel la deuxième lèvre d'étanchéité (12) s'étend à l'écart de l'évidement de libération (6).

8. Procédé d'étanchéité d'un appareil à vanne (1) selon l'une quelconque des revendications 1 à 7,
comprenant les étapes suivantes
la venue en butée de manière étanche uniquement de la première lèvre d'étanchéité (11) contre le corps de fermeture (5) lorsqu'un côté orifice (19) est exposé à une pression supérieure à celle d'un côté vanne (18) dans un premier état de fonctionnement (21) du corps de fermeture (5), et
la venue en butée de manière étanche uniquement de la deuxième lèvre d'étanchéité (12) contre le corps de fermeture (5) lorsqu'un côté vanne (18) est exposé à une pression supérieure à celle d'un côté orifice (19) dans un deuxième état de fonctionnement (22).

9. Procédé selon la revendication 8,
**caractérisé en ce que**
le joint (2) comprend une portion de volet, dans lequel, lorsqu'il y a un changement de pression entre le côté orifice (19) et le côté vanne (18), c'est-à-dire lorsque le côté orifice (19) est exposé à une pression plus élevée que celle du côté vanne (18) ou inversement, le joint (2) se plie le long de la portion de volet de telle sorte que seule la première lèvre d'étanchéité (11) bute de manière étanche contre le corps de fermeture (5) lorsque le côté orifice (19) du corps de fermeture (5) est exposé à une pression supérieure à celle d'un côté vanne (18), et que
seule la deuxième lèvre d'étanchéité (12) bute de manière étanche contre le corps de fermeture (5) lorsque [le] côté vanne (18) du corps de fermeture (5) est exposé à une pression supérieure à celle du côté orifice (19).
